# EUROPÄISCHE PATENTANMELDUNG

(11) **EP 1 577 906 A2**
(43) Veröffentlichungstag der Anmeldung: **21.09.2005**
(21) Anmeldenummer: 05005568.0
(22) Anmeldetag: 15.03.2005
(51) Int. Cl.: H01C 7/02, B60K 28/14

(54) **Sicherung mit einem seinen elektrischen Widerstand bei einer Temperaturerhöhung vergrössernden Bauelement**

(30) Priorität: 20.03.2004 DE 202004004393 U
(71) Anmelder: Wilhelm Pudenz GmbH, 27243 Dünsen (DE)
(72) Erfinder: Scheele, Jürgen, 27793 Wildeshausen (DE)
(74) Vertreter: Jabbusch, Matthias

(57) **Zusammenfassung**

Bei einer Sicherung mit wenigstens zwei Anschlußkontakten, welche über ein seinen elektrischen Widerstand bei einer Temperaturerhöhung vergrößerndes Bauelement mit einer elektrisch leitend kontaktiert sind, ist vorgesehen, daß dem Bauelement ein in Abhängigkeit von einem extern ausgelösten Signal arbeitendes Heizglied zur Trennung des Strompfades zwischen den Anschlußkontakten zugeordnet ist.

Diese Sicherung kann sowohl passives Bauteil wie eine herkömmliche Sicherung bilden, als auch ein aktives Bauteil bilden, das auf Befehl gernauslösbar ist und den Strompfad blockieren kann.

## Beschreibung

Die Erfindung betrifft eine Sicherung mit wenigstens zwei Anschlußkontakten, welche über ein seinen elektrischen Widerstand bei einer Temperaturerhöhung vergrößerndes Bauelement miteinander elektrisch leitend kontaktiert sind.

Sicherungen erfüllen eine Schutzfunktion für den damit abgesicherten elektrischen Schaltkreis. Bei Auftreten eines Fehlers, z.B. einer Überlast, wird das Bauelement durch höhere Stromstärken erwärmt, wobei es seinen Widerstand erhöht und dadurch den Strompfad blockiert. Unter normalen Betriebsbedingungen blockiert eine solche Sicherung nicht.

Im Rahmen bestimmter Sicherheitskonzepte für den Betrieb elektrischer Anlagen, insbesondere an Bord von Fahrzeugen, kann es notwendig sein, sämtliche oder nur bestimmte Stromkreise bzw. Strompfade bei bestimmten Ereignissen zu deaktivieren. Es ist z.B. denkbar, daß bei einer Fahrzeugkollision der Airbag ausgelöst wird, jedoch das Bordnetz weiter unter Betriebsspannung steht, was unter Umständen nachteilig für die Sicherheit der möglicherweise verletzten Fahrzeuginsassen sein kann.

Es sind bereits pyrotechnische Trennsysteme für Strompfade bekannt, die durch ein externes Signal ausgelöst werden können. Mit ihnen werden mittels eines entsprechenden Wirkgliedes den Strompfad bildende Bauteile, z.B. Leitungen, Bleche oder Drähte mechanisch durchtrennt. Bekannt ist es, daß dies bei Zündung einer Patrone über ein davon angetriebenes Messer erfolgt.

Die bekannten Trennsysteme haben zwar den Vorteil, daß Sicherheitsaspekten weitgehend genügt wird. Nachteilig ist es jedoch, daß nach einmal erfolgter Auslösung eine mechanische Zerstörung des Strompfades stattgefunden hat, die anschließend zu mehr oder weniger aufwendigen Reparaturarbeiten zwingt.

Der Erfindung liegt die Aufgabe zugrunde, eine Sicherung der eingangs genannten Gattung so auszubilden, daß sie sowohl passives Bauteil wie eine herkömmliche Sicherung bleibt, als auch ein aktives Bauteil bildet, das auf Befehl fernauslösbar ist und den Strompfad blockieren kann.

Diese Aufgabe ist erfindungsgemäß dadurch gelöst, daß dem Bauelement ein in Abhängigkeit von einem extern ausgelösten Signal arbeitendes Heizglied zur Trennung des Strompfades zwischen den Anschlußkontakten zugeordnet ist.

Bei der erfindungsgemäßen Sicherung sind die bekannten Sicherungstechnologien mit einem Blockiersystem in einer Funktionseinheit verbunden. Ein fernauslösbares Heizglied ist in der Lage, eine Temperaturerhöhung bereitzustellen und damit das Bauelement zu erwärmen. Dessen Widerstand steigt vorzugsweise gegen unendlich. Der hohe Widerstand führt zur Blockade des Stromweges, was einer sicherungstechnisch normalen und üblichen Trennung entspricht. Das Heizglied benötigt kein Messer oder dergleichen mechanisches Trennelement und wird durch ein externes Signal ausgelöst. Damit ist die erfindungsgemäße Sicherung in der Lage, zugleich die Funktion eines nur bei Fehlem im Strompfad reagierenden passiven Bauteils, als auch eines aktiven Bauteils auszuführen, welches den Stromweg auf Befehl blockieren kann.

Das externe Signal für das Heizglied kann von unterschiedlichen Befehlsgebern kommen.

Nach einer ersten Weiterbildung der Erfindung ist vorgesehen, daß das Heizglied ein zweites seinen elektrischen Widerstand bei einer Temperaturerhöhung vergrößerndes Bauelement ist, das an die Oberfläche des ersten Bauelementes angelegt ist. Das Heizglied ist somit entsprechend dem Blockadeelement auf dem Stromweg zwischen den Anschlußkontakten ausgebildet. Während das Bauelement zwischen den Anschlußkontakten seinen Widerstand nur dann erhöht, wenn über den Stromweg ein Strom mit einer hohen Stromstärke fließt, kann die Temperatur des zweiten Bauelementes gezielt durch ein Befehl erhöht werden. Dazu wird ein Strom durch das zweite Bauelement geleitet, der zu einer Temperaturerhöhung dieses zweiten Bauelementes führt. Bevor eine Widerstandsvergrößerung in diesem zweiten Bauelement einen weiteren Stromdurchfluß verhindert, ist die Temperatur in diesem zweiten Bauelement bereits so groß geworden, daß sie bei der gegebenen Anlage des zweiten Bauelementes an dem ersten Bauelement auch eine Temperaturerhöhung im ersten Bauelement verursacht. Dadurch erhöht sich zugleich der Widerstand in diesem ersten Bauelement und wird die Stromleitung über das erste Bauelement blockiert.

Das zweite Bauelement ist vorzugsweise unmittelbar auf das erste Bauelement aufgelegt, so daß eine Temperaturleitung erleichtert ist. Zwischen beiden Bauelementen können dabei die Temperaturleitung verbessernde Mittel angeordnet sein, wie eine Wärmeleitpaste.

Vorzugsweise ist jedes dieser Bauelemente als PPTC-Bauelement ausgebildet. Derartige PPTC-Bauelemente (Polymeric Positive Temperature Coefficient) sind selbstrückstellende Sicherungen, deren Widerstand bei einer Temperaturerhöhung ansteigt. Erreicht die Temperatur eine Sprungtemperatur bzw. Triptemperatur, erfolgt eine schlagartige Erhöhung des Widerstandes dieser Bauelemente um mehrere Zehnerpotenzen, was quasi zu einer Stromblockierung bzw. Stromtrennung führt. Dabei können diese PPTC-Bauelemente kompakt ausgebildet sein. Das erste PPTC-Bauelement und das zweite PPTC-Bauelement können beispielsweise unmittelbar aufeinander geklebt sein. Beide Bauelemente können auch ein gemeinsames Gehäuse aufweisen und somit als einteiliges Bauteil ausgebildet sein. Es ist auch möglich, beide PPTC-Bauelemente in einer Nabeneinanderlage miteinander zu vergießen.

Die Erhöhung des Widerstandes eines derartigen Bauelementes tritt beispielsweise bei einer Triptemperatur von ca. 125 °C auf.

Nach einer alternativen Ausbildung der Erfindung ist vorgesehen, daß das Bauelement ein PPTC-Bauelement ist, und daß das Heizglied einen Gasgenerator aufweist, der bei Empfang des Signals das Bauelement erwärmendes Gas freisetzt. Die Temperaturerhöhung des ersten Bauelementes erfolgt durch ein Gas, das von einem Gasgenerator freigesetzt wird und mit dem das erste Bauelement kontaktiert wird. Dieses erste Bauelement ist wieder als PPTC-Bauelement ausgebildet, das bei einer Temperaturerhöhung seinen Widerstand schlagartig erhöht und aufgrund dieser Widerstandserhöhung den Stromweg zwischen den Anschlußkontakten blockieren kann.

Das erste Bauelement und das Heizelement sind mit Vorteil in einem Gehäuse untergebracht, das so dimensioniert ist, daß seine Abmessungen und Formgebungen an sich bekannten bereits im Einsatz befindlichen Sicherungen sehr ähnlich sind. Die erfindungsgemäße Sicherung könnte z.B. eine übliche Sicherung ersetzen, wenn die Abmessungen hinsichtlich der Anschlußkontakte zueinander passen und am Einbauort der erfindungsgemäßen Sicherung, die eine dort befindliche übliche Sicherung ersetzen soll, ausreichend Einbauraum zur Verfügung steht. Eine Nachrüstung bestehender elektrischer Anlagen ist dadurch problemlos möglich.

Bei einer bevorzugten Ausgestaltung ist das Gehäuse ein Flachgehäuse, aus dem die Anschlußkontakte herausragen. Diese Ausgestaltung entspricht der Form üblicher Flachsicherungen. Bei der erfindungsgemäßen Sicherung ist mit Vorteil das Gehäuse aus einer Unterschale und einer Oberschale zusammengesetzt. Dabei ist das Heizglied in der Oberschale aufgenommen und das Bauelement ist in der Unterschale angeordnet.

Ist das Heizglied ein Gasgenerator, so kann die Unterschale insbesondere in einem mit dem Gasgenerator kongruierenden Bereich als Aufnahme für einen vom Gasgenerator freigesetzten Gasstrom ausgebildet sein. Diese Aufnahme hat den Vorteil, daß der freigesetzte Gasstrom bei Auslösung des Gasgenerators hinsichtlich seiner Ausbreitung im Gehäuse auf die Ausbreitung in die Aufnahme hinein beschränkt wird.

Dabei ist die Anordnung und Ausbildung der Sicherung so getroffen, daß das Bauelement derart in der Unterschale angeordnet ist, daß vorbestimmte Bereiche seiner Oberfläche frei in der Aufnahme liegen und dem gegebenenfalls freigesetzten Gasstrom somit unmittelbar ausgesetzt sind. Diese Ausgestaltung ermöglicht es, zielgerichtet das Bauelement auf Befehl zu erwärmen.

Mit besonderem Vorteil ist der Werkstoff für das Gehäuse ein spritzgußfähiges Isoliermaterial, so daß sich an der Oberschale eine kammerartige Ausformung anformen läßt, in welcher das Heizglied angeordnet werden kann.

Die kammerartige Ausformung ist dabei so gestaltet, daß sie an wenigstens einer ihrer freien Außenoberflächen mindestens einen Anschluß für eine Signalleitung aufweist. Jede Signalleitung kann z.B. ein Strang aus elektrisch leitendem Werkstoff sein, beispielsweise ein Draht oder Kabel, der bzw. das mit den dafür vorgesehenen Anschlüssen an der kammerartigen Ausformung der Oberschale verbindbar ist, um das Signal zur Auslösung des Heizgliedes einzuleiten.

Ein Gasgenerator als Heizglied ist mit einem üblichen Zündmechanismus ausgerüstet, der die pyrotechnische Füllung einer Gaskammer zündet, so daß Gas durch eine Düse austreten und in die vorbeschriebene Aufnahme strömen kann, in der sich das Bauelement befindet, welches dann dem freigesetzten Gasstrom ausgesetzt ist und erwärmt wird. Die erfindungsgemäße Sicherung ist dann auf Befehl ausgelöst.

Die erfindungsgemäße, auf Befehl aktiv werdende Sicherung hat den Vorteil, daß sie, nach ihrer Fernauslösung, wie eine übliche passive Sicherung ausgetauscht werden kann oder bei Ersatz des neuen Gasgenerators in den Ursprungszustand zurückgesetzt wird. Wird als Heizglied ein zweites PPTC-Bauelement eingesetzt, so kann dieses ohne einen Austausch in seinen Ursprungszustand zurückgesetzt werden. Die fernauslösbare Sicherung ist somit insgesamt wieder in ihren Ursprungszustand zurückversetzbar, ohne vorteilhaft einen Austausch von Bauelementen oder der Sicherung insgesamt vorzunehmen.

Ein Ausführungsbeispiel der Erfindung, aus denen sich weitere erfinderische Merkmale ergeben, ist in der Zeichnung dargestellt. Es zeigen:
- Fig. 1: eine teilweise aufgeschnittene Ansicht einer erfindungsgemäßen Sicherung,
- Fig. 2: eine Ansicht der Oberschale des Gehäuses der erfindungsgemäßen Sicherung gemäß Fig. 1, und
- Fig. 3: eine Ansicht der Unterschale des Gehäuses der erfindungsgemäßen Sicherung gemäß Fig. 1 mit darin angeordnetem Schmelzleiter.

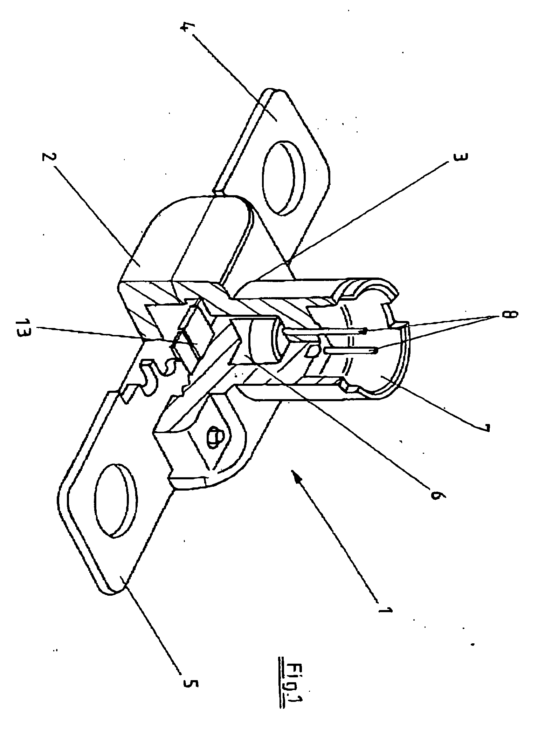

Fig. 1 zeigt die Ansicht einer teilweise aufgeschnittenen Sicherung, deren Gehäuse 1 aus einer Unterschale 2 und einer Oberschale 3 besteht. Zum Gehäuse zusammengesetzt, liegt zwischen Unterschale 2 und Oberschale 3, dabei im Gehäuse 1 aufgenommen, ein PPTC-Bauelement 13, das die Bauform eines Streifens hat. Aus dem Gehäuse 1 stehen Anschlußkontakte 4 und 5 nach außen vor.

In der Oberschale 3 ist ein Gasgenerator 6 als Heizglied aufgenommen. Dazu hat die Oberschale 3 eine kammerartige Ausformung 7 mit an ihrer Außenoberfläche zugänglichen Anschlüssen 8 für eine Signalleitung, die hier nicht weiter dargestellt ist.

Wird über die Signalleitung ein externes Signal in den Gasgenerator 6 eingeleitet, erzeugt dieser ein heißes Gas, das gegen das PPTC-Bauelement 13 strömt, um dieses zu erwärmen. Dadurch erhöht sich der Widerstand des PPTC-Bauelementes 13 schlagartig sehr stark und es erfolgt eine Trennung des über das PPTC-Bauelement 13 geführten Stromweges zwischen den Anschlußkontakten 4, 5.

Die gesamte Sicherung kann wie eine übliche Sicherung aufgrund ihrer Ausgestaltung und der Dimensionierung ihrer Anschlußkontakte 4, 5 gegen ein neues Bauteil ausgetauscht werden, nachdem eine Auslösung erfolgt Ist. Sobald die Anschlußkontakte 4 und 5 befestigt sind, die Sicherung also an ihrem Einbauort sitzt, bedarf es nur noch der Verbindung der Signalleitung mit den Anschlüssen 8 an der Außenoberfläche der kammerartigen Ausformung 7.

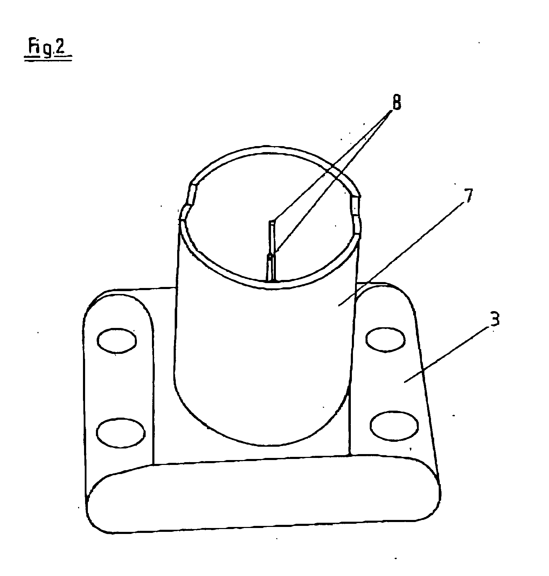

Fig. 2 zeigt eine schematische Ansicht der Oberschale 3 des Gehäuses 1. Gleiche Bauteile sind mit gleichen Bezugszahlen versehen.

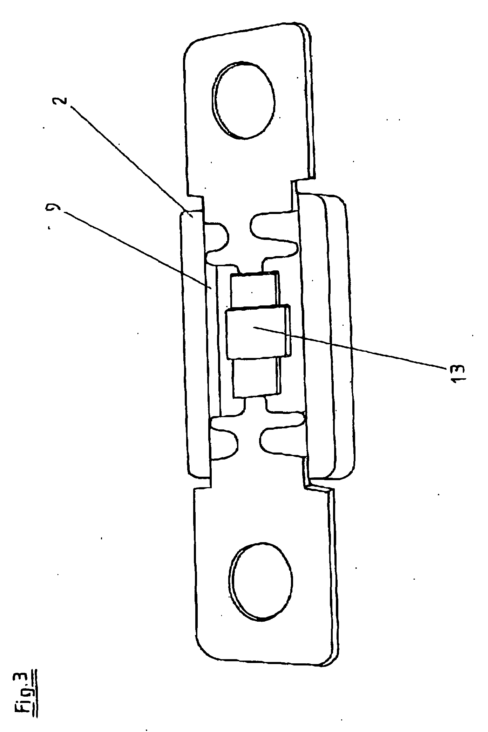

Fig. 3 zeigt eine Ansicht der Unterschale 2 der Sicherung mit eingesetztem PPTC-Bauelement 13. Fig. 3 verdeutlicht die in der Unterschale 2 befindliche Aufnahme 9 In Form einer eingeformten Vertiefung. Die Aufnahme 9 für einen vom Gasgenerator freigesetzten Gasstrom befindet sich in einem mit dem Gasgenerator 6 kongruierenden Bereich, wobei das PPTC-Bauelement 13 in der Unterschale 2 so angeordnet ist, daß vorbestimmte Bereiche seiner Oberfläche frei in der Aufnahme 9 liegen und dem gegebenenfalls freigesetzten Gasstrom damit ausgesetzt sind.

Statt eines Gasgenerators 6 kann als Heizelement auch ein zweites PPTC-Bauelement eingesetzt sein. Dies wird in der Oberschale 3 derart angeordnet, das es mit seiner Oberfläche direkt an der Oberfläche des ersten PPTC-Bauelementes 13 anliegt. Der Aufbau der Oberschale 3 kann dann wesentlich geringer sein.

## Patentansprüche

1. Sicherung mit wenigstens zwei Anschlußkontakten, welche über ein seinen elektrischen Widerstand bei einer Temperaturerhöhung vergrößerndes Bauelement miteinander elektrisch leitend kontaktiert sind,
**dadurch gekennzeichnet,**
**daß** dem Bauelement ein in Abhängigkeit von einem extern ausgelösten Signal arbeitendes Heizglied zur Trennung des Strompfades zwischen den Anschlußkontakten (4, 5) zugeordnet ist.

2. Sicherung nach Anspruch 1, **dadurch gekennzeichnet, daß** das Heizglied ein zweites seinen elektrischen Widerstand bei einer Temperaturerhöhung vergrößerndes Bauelement ist, das an die Oberfläche des ersten Bauelementes angelegt ist.

3. Sicherung nach Anspruch 1 oder 2, **dadurch gekennzeichnet, daß** jedes Bauelement ein PPTC-Bauelement (13) ist.

4. Sicherung nach Anspruch 1, **dadurch gekennzeichnet, daß** das Bauelement ein PPTC-Bauelement (13) ist, und daß das Heizglied einen Gasgenerator (6) aufweist, der bei Empfang des Signals das Bauelement (13) erwärmendes Gas freisetzt.

5. Sicherung nach einem der vorhergehenden Ansprüche, **gekennzeichnet durch** ein Gehäuse (1), in welchem das zwischen den Anschlußkontakten (4, 5) angeordnete Bauelement (13) und das Heizglied (6) angeordnet sind.

6. Sicherung nach Anspruch 5, **dadurch gekennzeichnet, daß** das Gehäuse (1) ein Flachgehäuse ist, aus dem die Anschlußkontakte (4, 5) herausragen.

7. Sicherung nach einem der Ansprüche 5 oder 6, **dadurch gekennzeichnet, daß** das Gehäuse (1) aus einer Unterschale (2) und einer Oberschale (3) zusammengesetzt ist.

8. Sicherung nach einem der vorhergehenden Ansprüche, **dadurch gekennzeichnet, daß** das Heizglied in der Oberschale (3) aufgenommen ist.

9. Sicherung nach einem der vorhergehenden Ansprüche, **dadurch gekennzeichnet, daß** das zwischen den Anschlußkontakten (4, 5) angeordnete Bauelement (13) in der Unterschale (2) angeordnet ist.

10. Sicherung nach einem der Ansprüche 4 bis 9, **dadurch gekennzeichnet, daß** die Unterschale (2) vorzugsweise in einem mit dem Gasgenerator (6) kongruierenden Bereich als Aufnahme (9) für einen vom Gasgenerator (6) freigesetzten Gasstrom ausgebildet ist.

11. Sicherung nach einem der Ansprüche 4 bis 10, **dadurch gekennzeichnet, daß** das Bauelement (13) derart in der Unterschale (2) angeordnet ist, daß vorbestimmte Bereiche seiner Oberfläche frei in der Aufnahme (9) liegen und dem gegebenenfalls freigesetzten Gasstrom ausgesetzt sind.

12. Sicherung nach einem der vorhergehenden Ansprüche, **dadurch gekennzeichnet, daß** der Werkstoff für das Gehäuse (1) ein spritzgußfähiges Isoliermaterial ist.

13. Sicherung nach einem der vorhergehenden Ansprüche, **dadurch gekennzeichnet, daß** die Oberschale (3) eine kammerartige Anformung aufweist, in welcher das Heizglied angeordnet ist.

14. Sicherung nach Anspruch 13, **dadurch gekennzeichnet, daß** die kammerartige Anformung an wenigstens einer ihrer freien Außenoberflächen mindestens einen Anschluß für eine Signalleitung aufweist.

15. Sicherung nach Anspruch 14, **dadurch gekennzeichnet, daß** jede Signalleitung ein Strang aus elektrisch leitendem Werkstoff ist.

16. Sicherung nach einem der Ansprüche 4 bis 15, **dadurch gekennzeichnet, daß** der Gasgenerator (6) eine Brennkammer, einen Zündmechanismus sowie eine Gasaustrittsöffnung aufweist.
